# EUROPÄISCHE PATENTSCHRIFT

(11) **EP 2 187 335 B1**
(45) Veröffentlichungstag und Bekanntmachung des Hinweises auf die Patenterteilung: **31.08.2016**
(21) Anmeldenummer: 09175756.7
(22) Anmeldetag: 12.11.2009
(51) Int. Cl.: G06K 7/08, G06K 19/067, G07D 7/02

(54) **Codeanordnung auf einer Informationsspeicherkarte**
Code system on an information storage card
Agencement de code sur une carte d'enregistrement d'informations

(30) Priorität: 12.11.2008 DE 102008043679; 12.11.2009 DE 102009046650
(43) Veröffentlichungstag der Anmeldung: 19.05.2010
(73) Patentinhaber: manroland sheetfed GmbH, 63075 Offenbach (DE)
(72) Erfinder: Weiss, Robert, 86368 Gersthofen (DE); Gebhardt, Rainer, Dipl.-Ing., 63075 Offenbach (DE)
(74) Vertreter: Stahl, Dietmar

(56) Entgegenhaltungen:
- DE-A1-102008 013 509
- US-A- 4 634 847

## Beschreibung

Die Erfindung betrifft eine Speicherkarte mit einer aus leitfähigen Schichten bestehenden Codeanordnung nach Anspruch 1 und ein zugehöriges Verfahren zur Herstellung einer Speicherkarte.

Im Bereich der Warenlogistik sind intelligente Verpackungen in verschiedenen Varianten bekannt. Neben RFID-Transpondern, 2-D-Codes oder anderen Funktionsoberflächen gibt es auch die Möglichkeit, Oberflächen zu erzeugen, die elektrische oder magnetische Felder beeinflussen. Dann kann z.B. mit Hilfe eines Lesegerätes die Information eines solchen Druckproduktes (Magazin-Inlay, Visitenkarte, Verpackungslasche) genutzt werden, um interaktiv eine Internetverbindung aufzubauen oder z.B. Zugangsdaten abzugleichen.

Die vorliegende Erfindung bezieht sich auf den Einsatz von Materialien, die elektrische oder magnetische Felder beeinflussen können, die auf der Verwendung von entsprechenden Füllstoffen in Druckfarben (üblicherweise Dispersionen von metallischen Mikro- oder Nanopartikeln), Lacken oder Folien beruhen.

Hierzu sind aus den Veröffentlichungen DE 10 2006 056 562 A1 und DE 10 2006 039 926 A1 sind ein Haushaltsgerät mit einem Lesegerät und wenigstens einer Informationskarte oder Speicherkarte bekannt. Die Informationskarte enthält eine Codeanordnung, die vom Lesegerät lesbar ist und der Steuerung des Haushaltsgerätes dient. Die Codeanordnung besteht dabei aus leitfähigen organischen Polymeren. Die Codeanordnung ermöglicht insbesondere ein kostengünstiges Lesegerät, welches die Codeanordnung beispielsweise durch induktive, kapazitive oder ohmsche Kopplung ausliest. Weiterhin besteht die Möglichkeit, die Codeanordnung zu drucken und dabei insbesondere Massendruckverfahren zu verwenden.

Die Informationskarte besteht aus zwei flexiblen Substratlagen, die insbesondere aus Papier oder aus Folie bestehen können. Die Codeanordnung kann dabei unsichtbar zwischen den beiden Substratlagen eingebettet werden. Dadurch ergibt sich die Möglichkeit, dass die Informationskarte auf Ihrer Ober- und/oder Unterseite völlig frei gestaltet bzw. bedruckt werden kann. Gegenüber einem Strichcode hat die Codeanordnung aus leitfähigen organischen Polymeren vor allem auch den Vorteil einer sicheren Lesbarkeit, da die Struktur geschützt zwischen zwei Substratlagen angeordnet werden kann.

Wenn die Informationskarte aus zwei flexiblen Substratlagen aus Papier oder Folie besteht, kann die Zusammenfügung beispielsweise durch Laminierung oder in sonstiger Weise erfolgen.

Aus der US 4,634,487 ist ein Lesegerät für kapazitive Datenträger bekannt. Das Lesegerät dient zum kapazitiven Abtasten von Datenträgern aus nichtleitendem Material, die Marken aus leitendem Material tragen, die auch in Drucktechnik erstellt werden können. Derartige Datenträger können als Markierungen tragende Etikette mit einem Substrat aus nichtleitendem Material, wie Papier oder Plastik, ausgebildet sein, auf das an vorgegebenen Stellen Markierungen entsprechend dem gewünschten Code aufgebracht worden sind. Das Aufbringen der leitenden Markierungen kann durch Aufdrucken von leitfähiger Farbe oder Aufbringen sehr dünner, leitender Folien erfolgen.

Aus der DE 10 2008 013 509 A1 ist ein Verfahren zum Erzeugen eines steganografischen Bildes auf einem Bedruckstoff bekannt. Das Verfahren beinhaltet, dass der Bedruckstoff mit einer Transferfolie in Kontakt gebracht wird, und dass zuvor ein dem steganografischen Bild entsprechendes Klebstoffraster auf den Bedruckstoff und/oder die Transferfolie aufgebracht wird. Das steganografische Bild ist gerastert und zeichnet sich durch optische und dekorative Wirkungen erzielende Effekte innerhalb eines Druckbildes aus.

Besonders kostengünstig ist die Herstellung der Informationskarten dann, wenn die leitfähigen organischen Polymere durch ein Massendruckverfahren, wie Hoch-, Tief- oder Flachdruckverfahren hergestellt werden. Nach Einbettung der Codeanordnung zwischen den Substraten können Ober- und / oder Unterseite der Informationskarte beliebig gestaltet bzw. bedruckt werden, ohne dass dabei Bereiche für die Codeanordnung freigehalten werden müssten.

Die Verarbeitung von organischen Polymeren für die leitfähigen Schichten der Codeanordnung ist allerdings aufwändig und es ist schwierig die Schichten sauber aufzubringen. Es besteht ständig die Gefahr, dass die Leitfähigkeit in den Schichten nicht einheitlich gegeben oder sogar teilweise unterbrochen ist.

Aufgabe der Erfindung ist es, eine sichere und einfach herzustellende Beschichtung für die Codeanordnung der Speicherkarte bereitzustellen.

Die Lösung der Aufgabe gestaltet sich in einer Vorrichtung nach den Merkmalen von Anspruch 1 und einem Verfahren nach Anspruch 7.

Die erfindungsgemäße Informations-/Speicherkarte weist eine aus wenigstens einer leitfähigen metallischen Schicht bestehenden Codeanordnung auf. Diese kann durch das Vorhandensein bzw. Nichtvorhandensein von wenigstens einer Speicherelektrode einen ersten Teil eines Kondensators bildet. Die Codeanordnung ist mit einem Lesegerät kapazitiv auslesbar.

Die Speicherelektroden werden dabei auf ein flexibles Substrat, wie Papier oder Folie nach dem Verfahren des Kalt- oder des Heißfolientransfers aufgedruckt. Gemäß einem bevorzugten Ausführungsbeispiel ist die Codeanordnung oberflächig unsichtbar zwischen zwei Substraten angeordnet.

Es ist möglich, jeder Speicherkarte eine einzigartige Codeanordnung zuzuordnen, die in einer Datenbank hinterlegt ist, wobei die Entwertung der Speicherkarte durch eine entsprechende Eintragung in der Datenbank erfolgt. Weitere Vorteile und Ausgestaltungen der Erfindung werden im Folgenden anhand der Beschreibung und der Zeichnung näher erläutert.

Das Ausführungsbeispiel ist anhand von Zeichnungen näher erläutert.

Dabei zeigen
- Figur 1: eine schematische Draufsicht einer Speicherkarte, die auch einer Schnittdarstellung längs einer Linie 9 in der Fig. 2 entspricht,
- Fig. 2: eine Schnittdarstellung durch eine Speicherkarte, die wenigstens im unteren Bereich einer Anordnung hinsichtlich ihrer Lage längs einer Linie 8 in der Fig. 1 entspricht, und
- Fig. 3: eine Schemadarstellung einer Beschichtungsmaschine zur Aufbringung einer Codeanordnung.

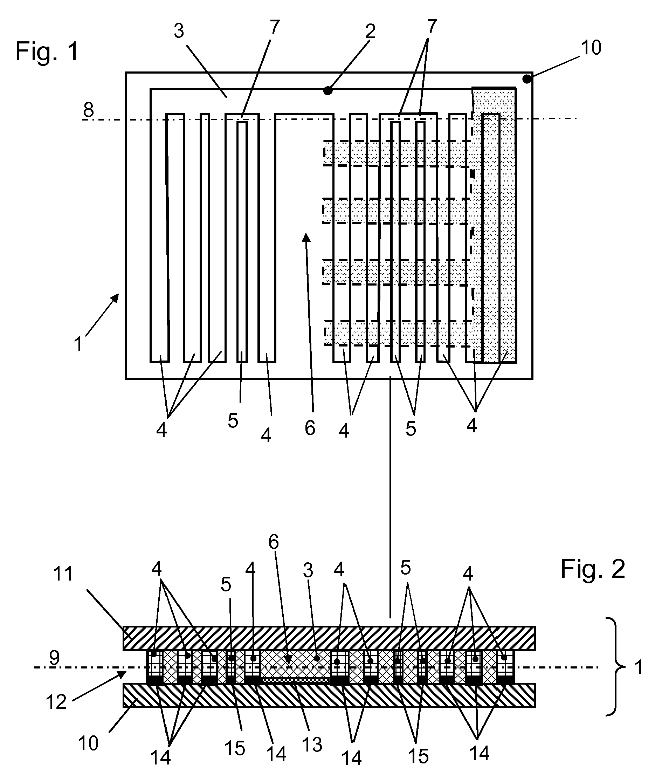

Die in Fig. 1 dargestellte Speicherkarte 1 (als Draufsicht oder entsprechend Schnittlinie 9 in Figur 2) weist eine aus leitfähigen Metallschichten bestehende Codeanordnung 2 auf, die Informationen beinhaltet oder selbst eine Information symbolisiert. Die Codeanordnung 2 wird durch mehrere Speicherflächen 4, 5, 6 gebildet, die kammartig an einer gemeinsamen Basisfläche 3 angeordnet sind. Die Codeanordnung 2 wurde in einem Druckverfahren mittels Kaltfolientransfer auf ein Substrat 10 gedruckt, wobei insbesondere für die Herstellung einer eine Folienschicht aufnehmenden Kleberschicht 13, 14, 15 ein Massendruckverfahren, wie das Hoch-, Tief- oder Flachdruckverfahren zur Anwendung kommt. Als Substrat 10 kommt insbesondere ein flexibles Substrat, wie Papier oder Folie in Betracht, wobei dieses Substrat 10 die Wirkung eines Dielektrikums haben soll.

Die kammartigen Speicherflächen 4 und 5 sind in unterschiedlicher Weise der Basisfläche 3 zugeordnet.
Die Speicherflächen 4 sind mit der Basisfläche verbunden und haben eine normale Breite. Die Speicherflächen 4 können also für die Speicherung von Informationen genutzt werden.
Die Speicherflächen 5 sind von der Basisfläche 3 getrennt und weisen eine geringere Breite auf als die Speicherflächen 4.

Die Speicherflächen können auch andere Anordnungen aufweisen, wie in Figur 1 durch strichliiert Linien und Schraffur angedeutet ist. Durch quer liegende Speicherflächen ergibt sich damit ein Raster zur Definition von Informationscodes. Die Codeanordnungen 2 werden dann noch umfangreicher nutzbar. Die weiter oben vorgeschlagenen Druckverfahren sind sämtlich zur Herstellung derartiger Anordnungen geeignet.

In einem weiteren Bereich 6 der Speicherkarte 1 sind der Basisfläche 3 überhaupt keine Speicherflächen 4 oder 5 zugeordnet. Dadurch ist dieser Bereich 6 in Abhängigkeit von seiner Lage und Größe zwar nicht aktiv aber doch auch als ein passives Codierungsmerkmal der Speicherkarte 1 geeignet.

Gemäß Figur 1 kann die Codeanordnung 2 oberflächlich auf dem Substrat 10 der Speicherkarte 1 angeordnet sein.

In der Schnittdarstellung nach Fig. 2 (entsprechend Schnittlinie 8 in Figur 1) ist die Speicherkarte 1 so ausgeführt, dass die Codeanordnung 2 oberflächig unsichtbar in einem Zwischenraum 12 zwischen zwei Substraten 10, 11 angeordnet ist. Dadurch kann die Codeanordnung 2 vor Beschädigungen und Manipulationen geschützt werden.

Bei der beispielhaft dargestellten Codeanordnung 2 nach Figur 1 und 2 sind mehrere Speicherflächen 4, 5 vorgesehen, wobei eben diese Anzahl der Speicherflächen 4, 5 dafür bestimmend ist, wie aktiv verschieden wirkende Codeanordnungen realisiert werden können.

Als Werkstoffe der leitfähigen Metallschichten für die Speicherflächen 3, 4, 5 kommen beispielsweise Aluminium oder Kupfer oder Messing in Betracht.

Durch Verwendung der Verfahrensweisen für den Kaltfolientransfer, der in Verbindung mit dem Massendruckverfahren Offsetdruck sehr kostengünstig herstellbar ist, kann die Speicherkarte 1 in großer Anzahl sowie auf sehr schnelle und kostengünstige Weise hergestellt werden.
Die Codeanordnung 2 kann mit einem einfachen Lesegerät kapazitiv ausgelesen werden, wobei dieses wenigstens eine Einkoppelelektrode und wenigstens eine Leseelektrode aufweist. Beim Lesen der Codeanordnung 2 bildet die Speicherkarte 1 dann mit dem Lesegerät 3 zwischen Einkoppelelektrode und die Speicherflächen einen ersten und zwischen Leseelektrode und Speicherflächen einen zweiten Kondensator, so dass die eingeschriebenen Daten kapazitiv ausgelesen werden können.

Wenn das Lesegerät über eine Schnittstelle an einen Computer angeschlossen ist, kann es Daten von der Speicherkarte 1 über ein Kommunikationsnetz, insbesondere das Internet, zur Bewirkung einer Interaktion übermitteln. Die Entwertung der Speicherkarte 1 kann durch starke Strom-/Spannungsimpulse über das Lesegerät erfolgen, so dass an geeigneter Stelle einer Unterbrechung innerhalb der Codeanordnung 2 erfolgt und die Speicherkarte vom Lesegerät als entwertet erkannt werden kann. Jeder Speicherkarte kann auch als einzigartige Codeanordnung angelegt sein, die in einer Datenbank hinterlegt ist.

Erfindungsgemäß ist die Verwendung von Kalt- oder Heißprägetechnologie aber auch zur Erzeugung von beliebigen Strukturen vorgesehen, die entsprechend der Strukturform in der Lage sind, ein elektrisches oder magnetisches Feld, das durch ein Lesegerät erzeugt wurde, oder durch ein Lesegerät erzeugte, elektrische oder magnetische Felder beeinflussen können.
Die Verwendung von hierzu zu erzeugenden leitfähigen Metallschichten im Beschichtungsverfahren des Kaltfolientransfers ermöglicht dabei eine besonders kostengünstige und massenhafte Herstellung von derartigen Speicherkarten. Die kapazitive Auslesbarkeit der Codeanordnungen erlaubt dabei entsprechend dem Konstruktionsprinzip eine unsichtbare Anordnung der Codeanordnung zwischen zwei Substraten, wodurch Manipulationen und Beschädigungen weitgehend vermieden werden können, und wobei gleichzeitig durch die homogene Metallschicht eine optimale Abtastbarkeit der Codeanordnung ermöglicht wird.

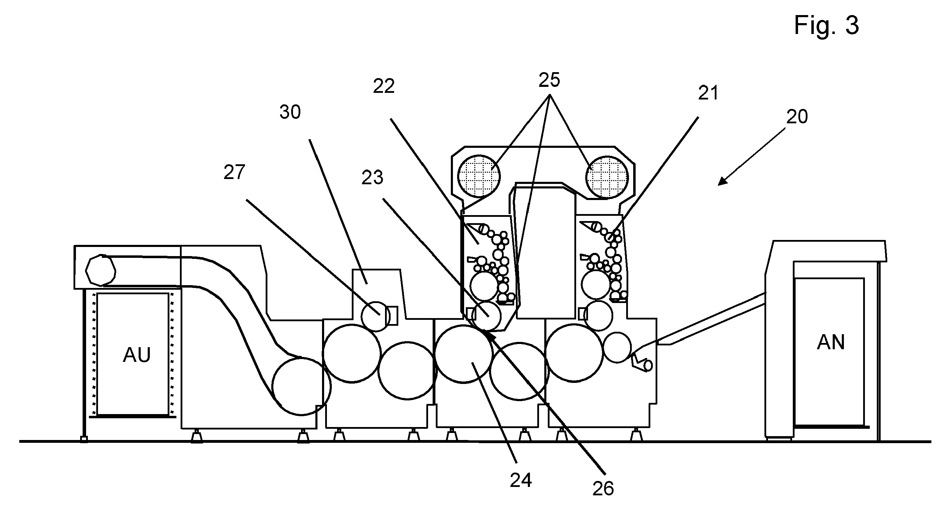

In Figur 3 ist eine derartige Beschichtungsmaschine 20 als Offsetdruckmaschine dargestellt. Diese Bogen verarbeitende Maschine besteht aus wenigstens zwei Druck- bzw. Applikationswerken. Die beiden Druck- bzw. Applikationswerke werden für folgende Zwecke eingesetzt:
Ein Druckbogen wird im ersten Druck- bzw. Applikationswerk mit einem bildgebenden Klebstoffmuster versehen (Auftragwerk 21). Das Auftragwerk 21 kann ein bekanntes Offsetdruckwerk mit einem Farbwerk, einem Plattenzylinder, einem Drucktuchzylinder und einem Bogen führenden Druckzylinder sein. Ebenso kann dies ein so genanntes Lackmodul sein, in dem der Drucktuchzylinder als Formzylinder ausgebildet ist. Der Formzylinder wird mit Farbe oder Kleber von einer z.B. als Kammerrakelsystem ausgebildeten Einrichtung anstatt des Farbwerkes versorgt.

Danach wird im folgenden Druck- bzw. Applikationswerk gemeinsam mit einem Druckbogen eine Transferfolie 25 durch einen Transferspalt 26 geführt, wobei die Transferfolie 25 im Transferspalt 26 gegen den Druckbogen gepresst wird (Beschichtungswerk 22).

Der Transferspalt 26 im Beschichtungswerk 22 wird durch eine Presswalze 23 und einen Gegendruckzylinder 24 gebildet. Hierbei kann die Presswalze 23 dem Drucktuchzylinder und der Gegendruckzylinder 24 dem Gegendruckzylinder eines Offsetdruckwerkes entsprechen. Weiterhin kann die Presswalze 43 dem Formzylinder und der Gegendruckzylinder 24 dem Gegendruckzylinder eines Lackmodules einer Bogendruckmaschine entsprechen. Hierzu kann schließlich das Beschichtungswerk 22 auch als Basiseinheit eines Druckwerkes ausgebildet sein, so dass lediglich ein Gegendruckzylinder 24 und eine Presswalze 23 vorhanden sind, um den Bogentransport und den Transferprozess im Transferspalt 46 in Verbindung mit entsprechend vorzusehenden Folienab- und -aufrollungen auszuführen.

Die Transferfolien 25 sind mehrschichtig aufgebaut. Sie weisen eine Trägerschicht auf, auf der mittels einer Trennschicht eine bildgebende Schicht aufgebracht ist. Die Trennschicht dient dem erleichterten Abheben der bildgebenden Schicht von der Trägerschicht. Die bildgebende Schicht kann z.B. eine metallische Schicht sein oder sie ist als anders geartete Funktionsschicht wie eine Glanzschicht oder eine Texturschicht oder eine eingefärbte Schicht oder eine ein oder mehrere Bildmuster enthaltende Schicht ausgeführt.
Als metallische Schichten kommen alle als Dünnschicht erzeugbaren Metallschichten in Frage. Bevorzugt wird Aluminium verwendet. Es sind aber auch andere leitfähige Metalle oder ferromagnetische Schichten herstellbar.

Dem Beschichtungswerk 22 ist in Fig. 3 ein weiteres Druckwerk 30, das hier als Lackmodul dargestellt ist, nachgeordnet. Das Lackmodul 30 weist insbesondere einen Formzylinder 27 auf, mittels dessen Beschichtungs- oder Prägevorgänge ausgeführt werden können.

Im Sinn der Inlineverarbeitung können anstatt des Druckwerkes 30 aber auch weitere Offsetdruckwerke und/oder Lackmodule und/oder Beschichtungseinheiten vorgesehen sein, die zudem in unterschiedlichen Kombinationen innerhalb der Beschichtungsmaschine 20 einander zugeordnet werden können.

Erfindungsgemäß sollen weiterhin für die Herstellung der Codeanordnungen 2 verschiedene Prozessvarianten zur Inlineverarbeitung in Verbindung mit einem Folientransfer vorgesehen sein.

Insbesondere ist hierfür auch die Verwendung des Beschichtungsverfahrens in Kombination mit anderen Prozessschritten vorgesehen, wie:
- Drucken von Farbe (Farbflächen oder Bildmuster)
- Drucken von Farbe und/oder Lack (Farbflächen oder Bildmuster mit Glanz- und/oder Schutzbeschichtung)
- Drucken / Beschichten oberhalb der Codeanordnung 2 bzw. auf die zuvor applizierte Codeanordnung 2
- Drucken / Beschichten unterhalb der Codeanordnung 2 bzw. bevor die Codeanordnung 2 appliziert wird
- Drucken / Beschichten auf den Substraten 10, 11 in einer Lage innenseitig zur Speicherkarte 1
- Drucken / Beschichten auf den Substraten 10, 11 in einer Lage außenseitig zur Speicherkarte 1
- Kleben der Codeanordnung 2 oder von Teilen der Speicherkarte 1 in Verbindung mit dem Drucken und/oder Beschichten der Codeanordnung innerhalb einer Produktionslinie
- Laminieren von Bestandteilen der Speicherkarte 1 (Substrate 10, 11) in Verbindung mit dem Drucken und/oder Beschichten der Codeanordnung 2 auf einem der Substrate 10, 11 innerhalb einer Produktionslinie

Bei einem erfindungsgemäßen Inlineverfahren zur Applikation einer Codeanordnung 2 auf einem Substrat 10 wird in einem ersten Druckwerk einer Bearbeitungsmaschine 20 im Offsetdruckverfahren partiell ein Kleber aufgebracht, wie sich dies in den Kleberschichten 13 bis 15 in Figur 2 darstellt.
In einem weiteren Druckwerk wird in einem Transferspalt eine Transferfolienschicht zum Folientransfer auf das mit Kleber beschichtete Substrat 10 gepresst so, dass an den zuvor mit Kleber versehenen Stellen durch Druck die Folienschicht von einer Trägerfolie auf das Substrat 10 übertragen und durch die Anhaftung von der Trägerfolie abgenommen wird. Dabei bleiben metallische Folienschichten zur Bildung der Codeanordnung 2 im Bereich der Basisfläche 3 und der Speicherflächen 4 und 5 auf dem Substrat 10 haften.

Alternativ kann zur Herstellung einer Codeanordnung 2 eine gefüllte Druckfarbe bzw. Lack verwendet werden, die mittels eines normalen Massendruckverfahrens hergestellt werden können.

Als Druckverfahren können hierzu Offsetdruck im nassen oder wasserlosen Verfahren, Flexodruck, Siebdruck, Tiefdruck oder Digitaldruckverfahren wie Inkjet, Elektrofotografie, Elektrografie, lonografie, Magnetografie, etc dienen.

Insbesondere die vorher beschriebenen beiden Varianten können in Druckmaschinen, z.B. Bogendruckmaschinen in Kombination mit anderen Verfahrensschritten als Inlineprozess eingesetzt werden.

So kann z.B. vor dem Folien- oder Farbauftrag ein geeigneter Primer aufgebracht werden, der die Funktion als Haftgrund und Dielektrikum, die Lebensdauer hinsichtlich Umwelteinwirkungen und die Haltbarkeit im Hinblick auf den Gebrauch der Speicherkarten 1 und schließlich ein vereinfachtes Recycling des Materials bzw. der Bestandteile der Speicherkarte 1 sicherstellt.

Weiterhin ist die Kombination mit dem Offset-Druckprozess durch entsprechende Anordnung der Druckwerke bzw. mehrere Maschinendurchgänge denkbar. So kann z.B. die Funktionsschicht, hier also die Codeanordnung 2, nach dem Schichttransfer oder dem Farbdruck überdruckt oder überlackiert werden, wobei dies wiederum flächig oder partiell erfolgen kann. Damit sind optische Effekte und Schutzfunktion zu erzielen. Ebenfalls möglich ist der beidseitige Druck auf dem Informationsträger.

Erfindungsgemäß hat das als Kleber zur Anhaftung der Transferfolienschicht verwendete Material eine die Codierungswirkung der Transferfolienschicht unterstützende Wirkung, indem er die kapazitive Wirkung der Metallschicht unterstützt.

Alternativ kann der Kleber die elektrische Eigenschaft des Substrats unterstützen. Ebenfalls möglich ist der Auftrag der Funktionsschicht in einem Flexodruckwerk. In diesem Zusammenhang können Offsetdruckwerke und weitere Flexodruckwerke beliebig miteinander kombiniert und zueinander angeordnet werden.

Das Wirkprinzip der Sensorik für das Auslesen der Speicherkarte kann auf elektrischen oder magnetischen Wechselwirkungen beruhen.

Das hat keine Auswirkung auf die zuvor genannten Verfahrensschritte der Herstellung, setzt jedoch die Verwendung geeigneter Materialien der Folienschicht voraus, die elektrisch leitend oder ferromagnetisch ausgebildet sein müssen.

### Beispiele für die Anwendung:

Die gemäß der oben genannten Erfindung mit elektrisch leitfähigen Materialien gedruckte Schicht kann z.B. entsprechend ihrer Struktur mit einem kapazitiv arbeitenden Lesegerät detektiert werden.

Bei Verwendung von z.B. ferromagnetischen Materialien kann die Struktur mit einem magnetischen Lesegerät erkannt werden.

### Bezugszeichenliste

- 1: Speicherkarte
- 2: Codeanordnung
- 3: Basisfläche
- 4: Speicherfläche
- 5: Speicherfläche
- 6: Zwischenbereich
- 7: Trennbereich
- 8: Schnittlinie
- 9: Schnittlinie
- 10: Substrat
- 11: Substrat
- 12: Zwischenraum
- 13: Klebeschicht
- 14: Klebeschicht
- 15: Klebeschicht
- 20.: Beschichtungsmaschine
- 21.: Auftragwerk
- 22.: Beschichtungswerk
- 23.: Presswalze
- 24.: Gegendruckzylinder
- 25.: Transferfolie
- 26.: Transferspalt
- 27.: Formzylinder

- 30.: Druckwerk

## Patentansprüche

1. Speicherkarte (1) mit einer aus leitfähigen Schichten bestehenden Codeanordnung (2), wobei metallische Schichten die Codeanordnung (2) durch das Vorhandensein bzw. Nichtvorhandensein bzw. eine Ausbildung als geschlossene Flächenelemente oder voneinander getrennte Flächenelemente von Speicherflächen (3, 4, 5) bilden, wobei die metallischen Schichten die Codeanordnung (2) in der Art von Elementen bilden, die eine spezifische Rückwirkung in einem elektrischen oder magnetischen Feld auslösen und dass die Codeanordnung (2) derart ausgebildet ist, dass sie mittels einer Leseeinrichtung unter Einwirkung elektrischer oder magnetischer Felder auslesbar ist,
wobei die Codeanordnung (2) durch metallische Schichten gebildet ist, die mittels eines Folientransferverfahrens aufgetragen sind, wobei die Codeanordnung (2) durch metallische Folien an Substraten (10, 11) auf strukturierten Kleberflächen haftend appliziert ist, wobei die Klebefläche jeweils aus einem Werkstoff gebildet ist,
**dadurch gekennzeichnet,**
**dass** das als Kleber zur Anhaftung der Transferfolienschicht verwendete Material eine die Codierungswirkung der Transferfolienschicht unterstützende Wirkung hat, indem der Kleber Eigenschaften aufweist, die die kapazitive Wirkung der Metallschicht unterstützen.

2. Speicherkarte (1) nach Anspruch 1, **dadurch gekennzeichnet,**
**dass** jeder Speicherkarte (1) eine einzigartige Codeanordnung (2) zugeordnet ist.

3. Speicherkarte (1) nach Anspruch 1, **dadurch gekennzeichnet,**
**dass** die Codeanordnung (2) durch ein Folientransferdruckverfahren in Verbindung mit weiteren Druckanteilen in einem Massendruckverfahren, insbesondere durch ein Hoch-, Tief- oder Flachdruckverfahren erzeugt ist.

4. Speicherkarte (1) nach Anspruch 1, **gekennzeichnet durch** Platzierung der Codeanordnung (2) und/oder der Speicherflächen (3, 4, 5) auf einem flexiblen Substrat (10, 11), wie Papier oder Folie, wobei die Speicherkarte (1) wenigstens eine, vorzugsweise zwei flexible Substratlagen (10, 11) aufweist, und dass die Speicherkarte (1) als flexibles Verbundelement ausgebildet ist.

5. Speicherkarte (1) nach den vorhergehenden Ansprüchen, **dadurch gekennzeichnet, dass** die Codeanordnung (2) oberflächlich unsichtbar zwischen zwei Substraten (10, 11) angeordnet ist.

6. Speicherkarte (1) nach den vorhergehenden Ansprüchen, **dadurch gekennzeichnet, dass** sie auf ihrer Ober- und/oder Unterseite bedruckt ist.

7. Verfahren zur Herstellung einer Speicherkarte (1) mit einer aus leitfähigen Schichten bestehenden Codeanordnung (2) nach Anspruch 1,
**dadurch gekennzeichnet,**
**dass** die Codeanordnung (2) als metallische Schichten mittels eines Folientransferdruckverfahrens aufgetragen werden, wobei eine die Codeanordnung (2) wiedergebende Kleberschicht auf wenigstens ein einen Teil der Speicherkarte (1) bildendes Substrat aufgetragen wird und dass unter Pressung die metallischen Schichten als Teil einer Transferfolie (25) von der Transferfolie (25) auf das Substrat übertragen werden, indem die metallischen Schichten nur im Bereich der Kleberschichten auf dem Substrat anhaften und die Transferfolie (25) von dem Substrat abgezogen wird.

8. Verfahren nach Anspruch 7, **dadurch gekennzeichnet, dass** der Folientransfer in Verbindung mit einem oder mehreren Prozessschritten des Druckens oder Beschichtens von Farbe und/oder Lack in einer Bearbeitungsmaschine (20), vorzugsweise einer Druckmaschine, erfolgt.

9. Verfahren nach Anspruch 7 oder 8, **dadurch gekennzeichnet, dass** der Druck- und/oder Beschichtungsvorgang auf dem die Codeanordnung (2) tragenden Substrat oberhalb und/oder unterhalb der bereits aufgetragenen oder noch aufzutragenden Codeanordnung (2) erfolgt.

10. Verfahren nach Anspruch 8 bis 9, **dadurch gekennzeichnet,**
**dass** der Druck- und/oder Beschichtungsvorgang auf einem oder allen Teilen des Substrats außenseitig und/oder innenseitig zu der die Codeanordnung (2) tragenden Speicherkarte (1) erfolgt.

11. Verfahren nach Anspruch 7 bis 10, **dadurch gekennzeichnet,**
**dass** der Druck- und/oder Beschichtungsvorgang auf einem oder allen Teilen des Substrats in Verbindung mit einem Kleben der Codeanordnung (2) und/oder von Teilen der Speicherkarte (1) in der Druckmaschine erfolgt.

12. Verfahren nach Anspruch 7 bis 10, **dadurch gekennzeichnet,**
**dass** der Druck- und/oder Beschichtungsvorgang auf einem oder allen Teilen des Substrats in Verbindung mit dem Laminieren der Teile des Substrat für die Speicherkarte (1), wenigstens zur Bildung einer Rohform der Speicherkarte (1), in der Druckmaschine erfolgt.

13. Verfahren nach Anspruch 7 bis 12, **dadurch gekennzeichnet**, Druckmaschine eine Bahnen oder Bogen verarbeitende Maschine ist und dass die Druckmaschine eine Offsetdruck- oder Flexodruck- oder Tiefdruck- oder Siebdruck- oder Digitaldruckmaschine ist.

## Claims

1. A memory card (1) with a code arrangement (2) consisting of conductive layers, wherein metallic layers form the code arrangement (2) through the presence or non-presence or a formation as closed surface elements or surface elements separated from one another of memory surfaces (3, 4, 5), wherein the metallic layers form the coat arrangement (2) in the manner of elements which trigger a specific repercussion in an electrical or magnetic field and that the code arrangement (2) is formed in such a manner that it can be read out by means of a reading device subject to the effect of electrical or magnetic fields, wherein the code arrangement (2) is formed by metallic layers which are applied by means of a film transfer method, wherein the code arrangement (2) is adheringly applied through metallic films on substrates (10, 11) on textured adhesive surfaces, wherein the adhesive surface in each case is formed from a material, **characterized in that** the material used as adhesive for the adhesion of the transfer film layer has an effect which promotes the coding effect of the transfer film layer **in that** the adhesive has characteristics which promote the capacitive effect of the metal layer.

2. The memory card (1) according to Claim 1, **characterized in that** each memory card (1) is assigned a unique code arrangement (2).

3. The memory card (1) according to Claim 1, **characterized in that** the code arrangement (2) is created through a film transfer printing method in conjunction with further printing components in a mass printing method, in particular by a letterpress, intaglio or flat screen printing method.

4. The memory card (1) according to Claim 1, characterized through placement of the code arrangement (2) and/or the memory surfaces (3, 4, 5) on a flexible substrate (10, 11), such as paper or film, wherein the memory card (1) comprises at least one, preferentially two flexible substrate layers (10, 11), and that the memory card (1) is formed as a flexible composite element.

5. The memory card (1) according to the preceding claims, **characterized in that** the code arrangement (2) on the surface is arranged invisibly between two substrates (10, 11).

6. The memory card (1) according to the preceding claims, **characterized in that** they are printed on the top and/or bottom side.

7. A method for producing a memory card (1) with a code arrangement (2) consisting of conductive layers according to Claim 1, **characterized in that** the code arrangement (2) is applied as metallic layers by means of a film transfer printing method, wherein an adhesive layer reproducing the code arrangement (2) is applied onto at least one substrate forming a part of the memory card (1) and that subject to compression the metallic layers as part of a transfer film (25) are transferred from the transfer film (25) onto the substrate, **in that** the metallic layers adhere to the substrate only in the region of the adhesive layers and the transfer film (25) is pulled off the substrate.

8. The method according to Claim 7, **characterized in that** the film transfer takes place in conjunction with one or more process steps of the printing or coating of ink and/or varnish in a processing machine (20), preferentially a printing press.

9. The method according to Claim 7 or 8, **characterized in that** the printing and/or coating process on the substrate carrying the code arrangement (2) takes place above and/or below the code arrangement (2) that has already been applied or is still to be applied.

10. The method according to Claim 8 to 9, **characterized in that** the printing and/or coating process takes place on one or all parts of the substrate on the outside and/or inside to the memory card (1) carrying the code arrangement (2).

11. The method according to Claim 7 to 10, **characterized in that** the printing and/or coating process takes place on one or all parts of the substrate in conjunction with a gluing of the code arrangement (2) and/or of parts of the memory card (1) in the printing press.

12. The method according to Claim 7 to 10, **characterized in that** the printing and/or coating process takes place on one or all parts of the substrate in conjunction with the laminating of the parts of the substrate for the memory card (1), at least for forming a raw form of the memory card (1), in the printing press.

13. The method according to Claim 7 to 10, **characterized in that** a printing press is a machine processing webs or sheets and **in that** the printing press is an offset printing or flexographic printing or intaglio printing or screen printing or digital printing press.

## Revendications

1. Carte mémoire (1) avec un dispositif à codes (2) constitué de surfaces conductrices, des couches métalliques formant le dispositif à codes (2), par la présence ou l'absence d'éléments plans fermés ou d'éléments plans fermés séparés les uns des autres de surfaces de mémoire (3, 4, 5) ou par une conception en tant que tels, les couches métalliques du dispositif de codes (2) formant des éléments du type de ceux qui déclenchent un effet rétroactif spécifique dans un champ électrique ou magnétique et le dispositif de codes (2) étant conçu de sorte à être lisible au moyen d'un système de lecteur sous l'effet de champs électriques ou magnétiques,
le dispositif de codes (2) étant formé par des couches métalliques qui sont apposées au moyen d'un procédé de transfert de film, le dispositif de codes (2) étant appliqué par adhérence par des films métalliques sur des substrats (10, 11) sur des surfaces structurées d'agent adhésif, la surface adhésive étant respectivement formée d'une matière,
**caractérisée en ce que**
la matière utilisée en tant qu'agent adhésif pour l'adhérence de la couche de film de transfert a un effet d'assistance de l'effet de codage de la couche de film de transfert **en ce que** l'agent adhésif présente des propriétés qui assistent l'effet capacitif de la couche métallique.

2. Carte mémoire (1) selon la revendication 1, **caractérisée en ce qu'**à chaque carte mémoire (1) est associé un dispositif de codes (2) unique.

3. Carte mémoire (1) selon la revendication 1, **caractérisée en ce que** le dispositif de codes (2) est créé par un procédé d'impression par transfert de film, en association avec d'autres composantes d'impression dans un procédé d'impression en relief, d'héliogravure ou de lithographie.

4. Carte mémoire (1) selon la revendication 1, **caractérisée par** le placement du dispositif de codes (2) et/ou des surfaces de mémoire (3, 4, 5) sur un substrat (10, 11) souple, comme du papier ou un film, la carte mémoire (1) comportant au moins une, de préférence deux couches de substrat (10, 11) souples et en ce que la carte mémoire (1) est conçue en tant qu'élément composite souple.

5. Carte mémoire (1) selon les revendications précédentes, **caractérisée en ce que** le dispositif de codes (2) est placé en étant invisible en surface entre deux substrats (10, 11).

6. Carte mémoire (1) selon les revendications précédentes, **caractérisée en ce qu'**elle est imprimée sur sa face supérieure et/ou inférieure.

7. Procédé destiné à fabriquer une carte mémoire (1) avec un dispositif de codes (2) constitué de couches conductrices selon la revendication 1,
**caractérisé en ce que**
le dispositif de codes (2) est apposé en tant que couches métalliques au moyen d'un dispositif d'impression par transfert de film, une couche d'agent adhésif reproduisant le dispositif de codes (2) étant appliqué sur au moins un substrat format une partie de la carte mémoire (1) et **en ce que** sous pression, on transmet les couches métalliques en tant que partie d'un film de transfert (25) du film de transfert (25) sur le substrat, **en ce que** les couches métalliques n'adhèrent sur le substrat que dans la région des couches d'agent adhésif et **en ce qu'**on retire le film de transfert (25) du substrat.

8. Procédé selon la revendication 7, **caractérisé en ce que** le transfert de film s'effectue en association avec une ou plusieurs étapes de procédé de l'impression ou du revêtement par encre et/ou peinture dans une machine de traitement (20) de préférence, une machine à imprimer.

9. Procédé selon la revendication 7 ou la revendication 8, **caractérisé en ce que** le processus d'impression et/ou de revêtement sur le substrat portant le dispositif de codes (2) s'effectue au-dessus ou en-dessous du dispositif de codes (2) déjà apposé ou qui doit encore être apposé.

10. Procédé selon la revendication 8 ou 9, **caractérisé en ce que** le processus d'impression et/ou de revêtement sur une ou sur toutes les parties du substrat s'effectue sur la face externe et/ou sur la face interne de la carte mémoire (1) portant le dispositif de codes (2).

11. Procédé selon les revendications 7 à 10, **caractérisé en ce que** le processus d'impression et/ou de revêtement sur une ou sur toutes les parties du substrat s'effectue en association avec un collage du dispositif de codes (2) et/ou de parties de la carte mémoire (1) dans la machine d'impression.

12. Procédé selon les revendications 7 à 10, **caractérisé en ce que** le processus d'impression et/ou de revêtement sur une ou sur toutes les parties du substrat s'effectue en association avec le laminage des parties du substrat pour la carte mémoire (1), au moins pour créer une forme grossière de la carte mémoire (1) dans la machine d'impression.

13. Procédé selon les revendications 7 à 12, **caractérisé en ce que** la machine d'impression est une machine de traitement de bandes ou de feuilles et **en ce que** la machine d'impression est une machine d'impression offset, d'impression flexographique ou d'héliogravure ou de sérigraphie ou d'impression numérique.
